# EUROPEAN PATENT SPECIFICATION

(11) **EP 4 458 163 B1**
(45) Date of publication and mention of the grant of the patent: **16.04.2025**
(21) Application number: 23171231.6
(22) Date of filing: 03.05.2023
(51) Int. Cl.: A23L 5/46, A23L 2/58, C09B 61/00, A23L 2/60, A23L 5/43, A23G 3/34, A23G 9/32

(54) **NATURAL BLUE COLORING COMPOSITIONS FOR CONFECTIONARY**
NATÜRLICH BLAU FÄRBENDE ZUSAMMENSETZUNGEN FÜR SÜSSWAREN
COMPOSITIONS COLORANTES BLEUES NATURELLES POUR LA CONFISERIE

(43) Date of publication of application: 06.11.2024
(73) Proprietor: Oterra A/S, 2970 Hørsholm (DK)
(72) Inventor: Bonnefous, Alienor, 2970 Hørsholm (DK); Briand, Alexandre, 2970 Hørsholm (DK)
(74) Representative: Willnegger, Eva

(56) References cited:
- WO-A1-2017/151271
- JP-A- S54 138 156
- US-A- 4 400 400
- ANONYMOUS: "Nutridex 20 Dried Glucose", 27 June 2022 (2022-06-27), Kent Foods Limited, pages 1 - 1, XP093088616, Retrieved from the Internet <URL:https://web.archive.org/web/20220627232244/https://www.kentfoodsdirect.co.uk/products/nutridex-20-dried-glucose-25kg> [retrieved on 20231004]
- ANONYMOUS: "Nutridex 20 Dried Glucose", 27 June 2022 (2022-06-27), Kent Foods Limited, pages 1 - 1, XP093088616, Retrieved from the Internet <URL:https://web.archive.org/web/20220627232244/https://www.kentfoodsdirect.co.uk/products/nutridex-20-dried-glucose-25kg> [retrieved on 20231004]

## Description

### FIELD OF THE INVENTION

The invention relates to the field of natural blue coloring compositions for food applications, such as confectionary, panned confectionary, jelly gum, ice cream or water ice.

EP2484230B1 granted to Wild GmbH & Co KG discloses a composition with a phycocyanin content of 0,5 w% to 2 w% based on the total composition. The Spirulina extract can be stabilized with sucrose and invert sugar. The concentrate can then be mixed with a carrier material, such as dried glucose syrup, and spray-dried. However, no dried glucose syrup formulation is exemplified. Finally, this document does not show any liquid composition comprising Spirulina extract, sucrose, and dried glucose syrup.

WO2017151271A1 to Krafts discloses in Example 3, Formula 1, Table 3 a pelletized colorant comprising 0.5 g Spirulina, 2.5 g com syrup and 10 g sucrose. According to paragraph [0058] th pelletized colorant had a slower dissolution rate than the pelletized colorant formed from Formula 2. Formula 2 consists of a com syrup of a dextrose equivalent DE 43 in an amount of 5 g, Spirulina in an amount of 0.5 g ad sucrose in an amount of 10 g. But this document does not disclose a liquid natural blue coloring composition comprising spirulina extract, sucrose and a starch-based compound with a Dextrose Equivalent (DE) between 19 and 23, wherein the concentration of the starch-based compound is from 1 w% to 15 w% as compared to the total weight of the natural blue coloring composition.

JP354138156A discloses in Example 3 a method for making a chewing gum consisting of 20 w% gum base, 69 w% sugar,10 w% starch syrup and 0.3 w% phycocyanin composition as well as 0.5 w% flavor. However, this document does not specify which mono or disaccharide is used as a sugar. Further, this document does not describe the Dextrose Equivalent of the starch syrup.

However, the coloring performance and stability are still a challenge. Therefore, there still is a need for stable and heat-resistant natural blue colouring compositions for homogenous coloration of food applications, in particular for confectionary, such as panned confectionary or ice cream.

### SHORT DESCRIPTION OF THE INVENTION

The inventors surprisingly found that the combination of sucrose and dried glucose syrup stabilizes liquid Spirulina-based coloring compositions and improves the blue coloring of panned confectionary products as compared to trehalose-based Spirulina compositions.

The step order of the manufacturing process unexpectedly improves the coloring performance. Consequently, the present combination of sugars as stabilizers for a Spirulina-based coloring compositions shows improved performance.

Effects as compared to a Spirulina-based coloring composition comprising trehalose, glycerol, trisodium citrate, acetic acid or invert sugar or combinations thereof concern:
▪ improved panning properties for hard panning in confectionary;
▪ improved heat stability;
▪ improved freezing stability; and
▪ improved acid stability.

Accordingly, a first aspect of the present invention is a liquid natural blue coloring composition comprising a phycocyanin-containing extract, in particular a Spirulina extract, starch-based compound with a Dextrose Equivalent (DE) between 19 and 23, preferably 21, and sucrose
wherein the natural blue coloring composition is obtainable by a process wherein the step order is:
   1) Adding the phycocyanin-containing extract, in particular the Spirulina extract, to an aqueous solution, preferably water, under agitation to obtain a first solution;
   2) Adding the starch-based compound with a DE between 19 and 23, preferably 21, under agitation to obtain a second solution; and
   3) Adding sucrose under agitation to obtain the natural blue coloring composition.
wherein the concentration of the starch-based compound is from 1 w% to 15 w% as compared to the total weight of the natural blue coloring composition; and
wherein the concentration of sucrose is
   ▪ In the absence of a salt, from 40 w% to 70 w% as compared to the total weight of the natural blue coloring composition; or
   ▪ In the presence of a salt, from 10 w% to 50 w% as compared to the total weight of the natural blue coloring composition.

In one embodiment the natural blue coloring composition consists of the phycocyanin-containing extract, in particular the Spirulina extract, the starch-based compound with a DE between 19 and 23, preferably 21, and sucrose.

The natural blue coloring composition is liquid.

In another aspect, the natural blue coloring composition does not comprise any trehalose, trisodium citrate, acetic acid or glycerol or combinations thereof.

In another aspect, the concentration of the phycocyanin-containing extract, in particular the Spirulina extract, is from 1 w% to 15 w%, preferably from 2,5 w% to 12,5 w%, preferably from 5 w% to 10 w% as compared to the total weight of the natural blue coloring composition.

In another aspect, the phycocyanin-containing extract, in particular the natural blue coloring composition, has a color strength E10% from 20 CU/kg to 40 CU/kg, preferably from 22 CU/kg to 30 CU/kg, even more preferably from 24 CU/kg to 28 CU/kg as measured by a spectrophotometer Shimadzu UV 1800 or 1900 with phosphate buffer pH 6,0.

In another aspect, the concentration of starch-based compound with a DE between 19 and 23, preferably 21, is from 1 w% to 15 w%, preferably from 2,5 w% to 12,5 w%, preferably from 5 w% to 10 w% as compared to the total weight of the natural blue coloring composition.

The concentration of sucrose is
▪ in the absence of a salt, from 40 w% to 70 w%, preferably from 45 w% to 65 w%, preferably from 50 w% to 60 w% as compared to the total weight of the natural blue coloring composition; or
▪ in the presence of a salt, from 10 w% to 50 w%, preferably from 20 w% to 40 w%, preferably from 25 w% to 35 w% as compared to the total weight of the natural blue coloring composition.

In another aspect, the natural blue coloring composition further comprises antifoaming agents, pH adjuster such as citric acid and/or salts such as sodium chloride.

In another aspect, the pH of the natural blue coloring composition is between 4 and 6, preferably between 4.5 and 5.5.

Another aspect of the present invention is the use of the natural blue coloring composition according to any one of the preceding claims for coloring food products, preferably confectionary products, even more preferably panned confectionary, jelly gum or ice cream.

Another aspect of the present invention is a method for producing the natural blue coloring composition of any one of the preceding claims wherein the step order is:
1) Adding Spirulina extract to an aqueous solution, preferably water, under agitation to obtain a first solution;
2) Adding the starch-based compound with a DE between 19 and 23, preferably 21, under agitation to obtain a second solution; and
3) Adding sucrose under agitation to obtain the natural blue coloring composition.

In another aspect, the Spirulina extract, the starch-based compound with a DE between 19 and 23, preferably 21, and the sucrose are evenly dispersed and dissolved preferably by an overhead stirrer or a powder/liquid mixer involving high-shear mixing.

In another aspect, the temperature is in the case of
▪ Overhead stirrer: from 18°C to 40°C, preferably from 20°C to 28°C; or
▪ High-shear mixer: from 5°C to 40°C, preferably from 20°C to 28°C.

Another aspect of the present invention is a food product, preferably confectionary product, even more preferably a panned confectionary product, jelly gum or ice cream comprising the natural blue coloring composition of any one of the preceding claims or obtained through the process of any one of the preceding claims.

### SHORT DESCRIPTION OF THE DRAWINGS

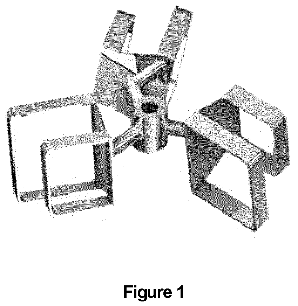

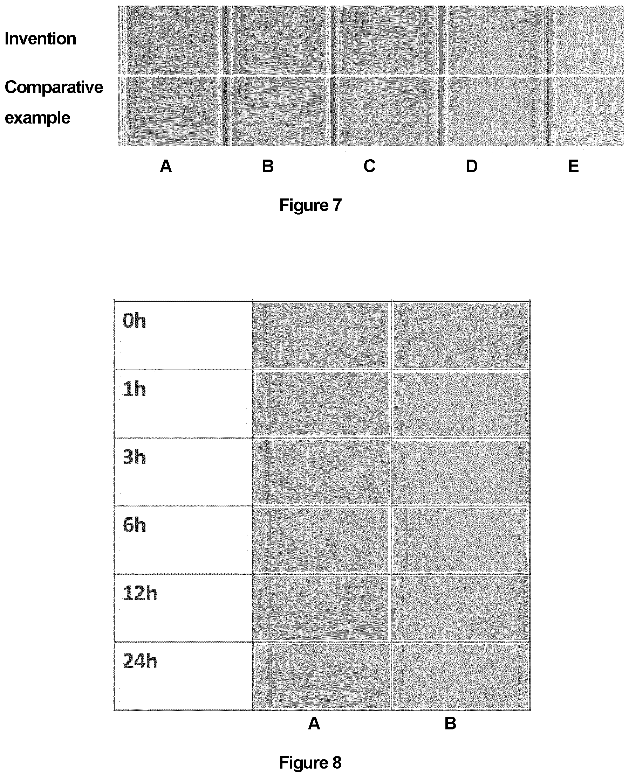

Figure 1 shows an exemplary blade: VISCO JET CRACK preferably used for the stirring of the natural blue coloring composition.
Figure 2 shows the microbiological stability over 8 weeks of an exemplary natural blue coloring composition consisting of 6.3% spirulina extract, 7.0% dried glucose syrup DE 21, 54.8% sucrose, 0.5% antifoam and 0.04% citric acid diluted in water. Figure 2A and 2B shows the microbiological stability in respect of yeast and mold at three different temperatures: 7°C, 15°C and 25°C.
Figure 3 shows the microbiological stability over 8 weeks of an exemplary natural blue coloring composition consisting of 5.7% spirulina extract, 7.3% dried glucose syrup DE 21, 57.1% sucrose, 0.5% antifoam and 0.04% citric acid diluted in water. Figure 3A and 3B shows the microbiological stability in respect of yeast and mold at three different temperatures: 7°C, 15°C and 25°C.
Figure 4A shows the microbiological stability over 8 weeks of a comparative blue coloring composition comprising trehalose, trisodium citrate and invert sugar.
Figure 4B shows the metal roll-out stick used in Example 2.
Figure 5 shows the panning results of Example 2. The natural blue coloring composition of the invention comprising Spirulina extract, dried glucose syrup and sucrose is shown in Figure 5B.
The comparative liquid Spirulina formulation comprising trehalose, Spirulina extract, trehalose, trisodium citrate and invert sugar is shown in Figure 5A.
Figure 6 shows a comparison of the coloring abilities of Example 2.
The natural blue coloring composition of the invention comprising Spirulina extract, dried glucose syrup and sucrose is shown in Figure 6B.
The comparative liquid Spirulina formulation comprising trehalose, Spirulina extract, trehalose, trisodium citrate and invert sugar is shown in Figure 6A.
Figure 7 shows a comparison of the coloring performance of Example 3 - jelly. The natural blue coloring composition of the invention comprising Spirulina extract, dried glucose syrup and sucrose is shown in in the top row of Figure 7.
The comparative liquid Spirulina formulation comprising trehalose, Spirulina extract, trehalose, trisodium citrate and invert sugar is shown in bottom row of Figure 7. Column A shows the performance of the colouring compositions without acid. Column B shows the performance of the colouring compositions with acid. Column C shows the performance of the colouring compositions after 5 minutes of heat treatment at 80°C. Column D shows the performance of the coloring compositions after 10 minutes of heat treatment at 80 °C. Column E shows the performance of the coloring compositions after 15 minutes of heat treatment at 80°C.
Figure 8 shows the light stability of the compositions of Example 3 tested in jelly gum. Column A of Figure 8 represents the comparative example, a liquid coloring composition comprising Spirulina extract, trehalose, trisodium citrate and invert sugar in jelly. Column B of Figure 8 shows the coloring performance of the inventive natural blue coloring composition comprising Spirulina extract, dried glucose syrup and sucrose in jelly.

### DETAILED DESCRIPTION OF THE INVENTION

The invention is now described in further detail without, however, limiting its scope.

### Phycocyanin-containing extract and Spirulina extract:

Phycocyanin-containing extract can be any extract from an organism, preferably microalga, that produces phycocyanin. A preferred phycocyanin-containing extract is Spirulina extract.

Spirulina extract describes an extract of the Spirulina algae, e.g., *Spirulina platensis* or *Arthrospira platensis.* This blue-green microalga is known both as a food supplement and as a raw material for food coloring. The pigments mainly found in Spirulina are two blue water-soluble biliproteins, c-phycocyanin and allophycocyanin, grouped under the term phycocyanin, green chlorophylls and yellow xantophylls.

In one embodiment, the Spirulina extract has a color strength E10% from 350 CU/kg to 450 CU/kg as measured by a spectrophotometer Shimadzu UV 1800 or 1900 with phosphate buffer pH 6,0.

In one embodiment, the concentration of the Spirulina extract is from 1 w% to 15 w%, preferably from 2,5 w% to 12,5 w%, preferably from 5 w% to 10 w% as compared to the total weight of the natural blue coloring composition.

In one embodiment, the natural blue coloring composition has a color strength E10% from 20 CU/kg to 40 CU/kg, preferably from 22 CU/kg to 30 CU/kg, even more preferably from 24 CU/kg to 28 CU/kg as measured by a spectrophotometer Shimadzu UV 1800 or 1900 with phosphate buffer pH 6,0.

### Color strength:

In one embodiment, the color strength is measured with a spectrophotometer Shimadzu UV 1800 or 1900. The sample preparation is made with phosphate buffer pH 6,0.

Preferably, the phosphate buffer is prepared as follows:
▪ Weigh 6,05 g of NaH2PO4.2 H2O and 1,10 g of Na2HPO4.2 H2O in a beaker of 1000 mL.
▪ Under stirring, add approximately 900 mL demineralized water until everything has dissolved.
▪ While stirring, adjust pH to 6,0 using NaOH or HCl. Fill to 1000 mL with demineralized water.

Preferably, the sample preparation is prepared as follows:
▪ Weigh x g of sample into a x mL volumetric flask (V1) and record the accurate weight.
▪ Dissolve the sample with phosphate buffer pH 6,0 and fill to the mark, mix well.
▪ Transfer x mL (Vt) of this dilution into a x mL volumetric flask (V2) and fill to the mark with the same buffer pH 6,0, mix well.
▪ Measure the absorbance of the second dilution at maximal wavelength (around 618 nm) in a spectrophotometer with 1 cm cell. The optical density must be between 0,25 and 0,90.

The Color Units (CU) (corresponding to E10% 1 cm at maximal absorbance wavelength) are calculated using the following formula:
▪ Color Strength (CU/kg) = (Absorbance at max peak around 618 nm x Dilution Factor) / (weight in gram x 100);
▪ where Dilution Factor = V1 x V2 / Vt.

### LCh measurement:

In one embodiment, measurements are performed in transmission mode with a spectrocolorimeter Datacolor 650 or 1050 (illuminant D65/10°, include mode). The sample is poured into a 1 cm quartz cell placed in the position closest to the detector. The sample is diluted with phosphate buffer pH 6,0 (same preparation as for color strength) in order to reach a lightness comprised between 70,0 and 70,1. Once the correct lightness is obtained, the chroma and hue of the sample are recorded.

### Color characteristics:

Preferably, the natural blue coloring composition has a color strength comprised between 24 to 28 CU/kg.

Preferably, at L70, the chroma (C*) is between 30 - 50, preferably between 35 and 45.

Preferably at L70, and a chroma (C*) is between 30 - 50, preferably between 35 and 45 and the hue (h*) is between 220 - 230.

### Cold stability and microbiological stability:

In one embodiment, the stability is minimum 6 months in frozen conditions (<-18°C).

In one embodiment, the stability is minimum 6 months in cold conditions (4 - 8°C)

In one embodiment, the stability is assessed by measuring the color strength, the LCh parameters, as well as the Brix, pH and water activity (direct reading).

In one embodiment, the high content of sugar allows the water activity to stay below 0,860 in order to protect the product against micro-organisms.

### Sucrose:

In the absence of a salt, the concentration of sucrose is from 40 w% to 70 w%, preferably from 45 w% to 65 w%, preferably from 50 w% to 60 w% as compared to the total weight of the natural blue coloring composition.

In the presence of a salt, the concentration of sucrose is from 10 w% to 50 w%, preferably from 20 w% to 40 w%, preferably from 25 w% to 35 w% as compared to the total weight of the natural blue coloring composition.

### Starch-based compound with a DE between 19 and 23:

The starch-based compound with a DE between 19 and 23, preferably 21, preferably is dried glucose syrup or maltodextrin.

The concentration of starch-based compound with a DE between 19 and 23, is from 1 w% to 15 w%, preferably from 2,5 w% to 12,5 w%, preferably from 5 w% to 10 w% as compared to the total weight of the natural blue coloring composition.

In one embodiment, the starch-based compound is a dried glucose syrup having a DE comprised between 21 and 23, preferably a DE of 21.

In one embodiment, the starch-based compound is a maltodextrin having a DE comprised between 19 and 20.

### Confectionary products:

The natural blue coloring composition may be used for coloring food products, preferably confectionary products, even more preferably panned confectionary, jelly gum or ice cream, water ice.

### pH of natural blue coloring composition:

In one embodiment, the pH of the natural blue coloring composition is between 4 and 6, preferably between 4.5 and 5.5. The pH is preferably measured directly in the liquid.

### Method:

the Method for producing the liquid natural blue coloring composition comprising the phycocyanin-containing extract, in particular the Spirulina extract, dried glucose syrup and sucrose is obtained by a method, wherein the step order is:
1) Adding the phycocyanin-containing extract, in particular the Spirulina extract, to an aqueous solution, preferably water, under agitation to obtain a first solution;
2) Adding the starch-based compound with a DE between 19 and 23, preferably 21, under agitation to obtain a second solution; and
3) Adding sucrose under agitation to obtain the natural blue coloring composition.

The agitation is preferably performed until the phycocyanin-containing extract, in particular the Spirulina extract, the starch-based compound with a DE between 19 and 23, preferably 21, and the sucrose are evenly dispersed and dissolved, preferably by an overhead stirrer or a powder/liquid mixer involving high-shear mixing.

In another aspect, the temperature is in the case of
▪ Overhead stirrer: from 18°C to 40°C, preferably from 20°C to 28°C; or
▪ High-shear mixer: from 5°C to 40°C, preferably from 20°C to 28°C.

### Heat stability:

Furthermore, confectionary ingredients need to be heat stable, as they are usually heated or cooked. The coloring performance of the natural blue coloring compositions are surprisingly similar to those of confectionary after heat treatment.

**Liquid:** the natural blue coloring composition is a liquid.

### Further ingredients:

The natural blue coloring composition may further comprise other ingredients, such as antifoaming agents, pH adjuster such as citric acid and/or salts such as sodium chloride.

The skilled person can choose the quantity of the further ingredients of the natural blue coloring composition of the present invention so that they add up to 100 w%.

### Color shades:

The natural blue coloring composition may further comprise other pigments, such as yellow or red pigments to produce for example green or violet color shades.

### EXAMPLES

The following examples illustrate the natural blue coloring compositions.

Following natural blue coloring compositions were tested:

### Example 1 - Microbiological stability:

Several challenge tests were conducted on exemplary natural blue coloring compositions comprising Spirulina extract, dried glucose syrup and sucrose to prove the resistance of the formulation to microbial growth in case of contamination.

A challenge test is a study where the microbiological stability is investigated at 7°C, 15°C and 25°C by adding potential spoilage organisms to the product at levels somewhat over the acceptable limit (ca. 1,0-2,0 x 10² cfu/g). Then the survival/growth of the micro-organisms is monitored over time. A negative control (without added micro-organisms) is also monitored at 7°C.

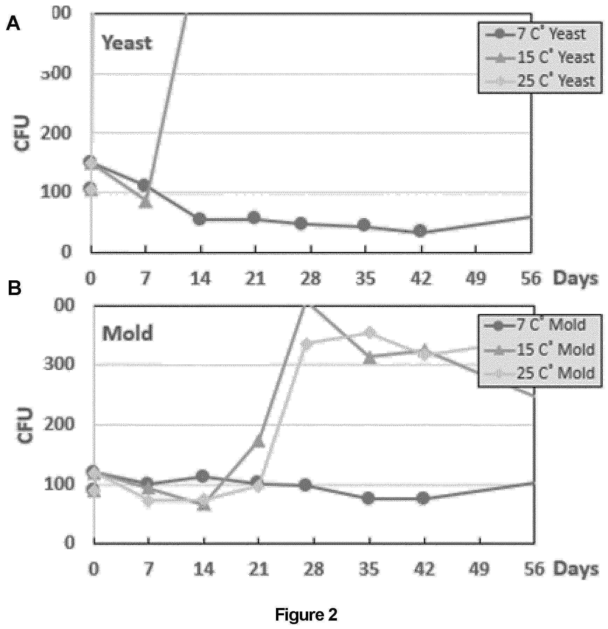

Figure 2 shows the microbiological stability over 8 weeks of an exemplary natural blue coloring composition consisting of 6.3% spirulina extract, 7.0% dried glucose syrup DE 21, 54.8% sucrose, 0.5% antifoam and 0.04% citric acid diluted in water.

Figure 2A and 2B shows the microbiological stability in respect of yeast and mold at three different temperatures: 7°C, 15°C and 25°C.

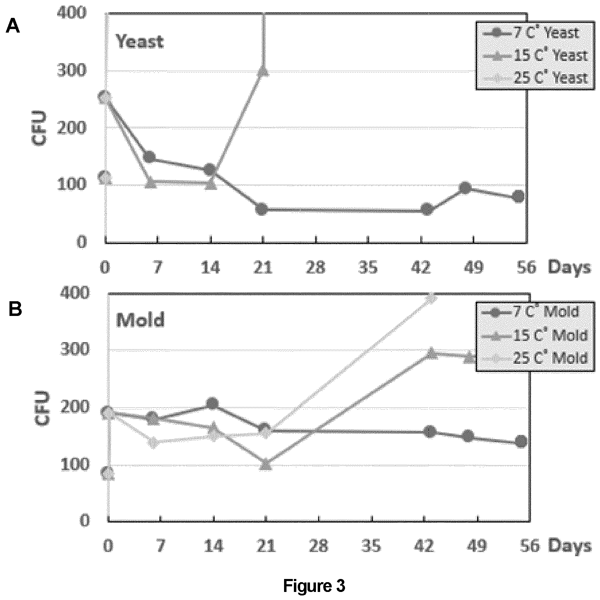

Figure 3 shows the microbiological stability over 8 weeks of an exemplary natural blue coloring composition consisting of 5.7% spirulina extract, 7.3% dried glucose syrup DE 21, 57.1% sucrose, 0.5% antifoam and 0.04% citric acid diluted in water. Figure 3A and 3B shows the microbiological stability in respect of yeast and mold at three different temperatures: 7°C, 15°C and 25°C.

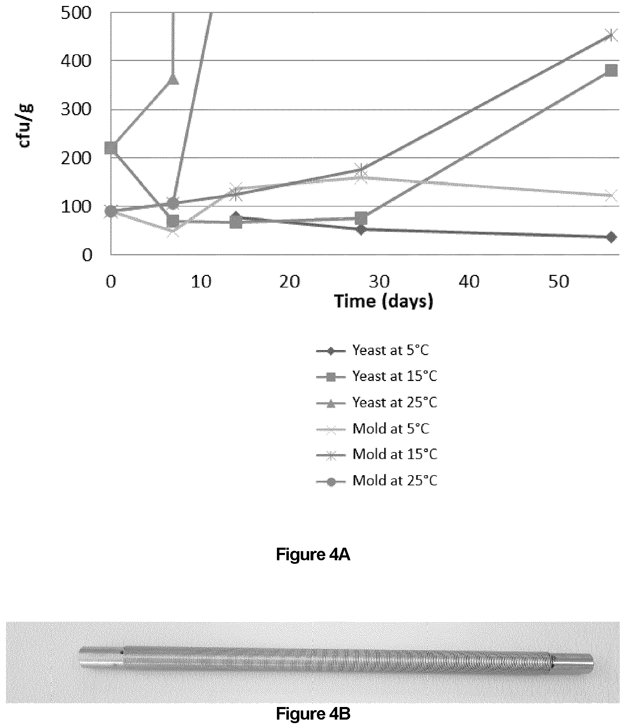

Figure 4 shows the microbiological stability over 8 weeks of a comparative blue coloring composition comprising trehalose, trisodium citrate and invert sugar.

The results show a satisfactory stability of the formulation at 7°C because the cell count for yeast and mold is either stable or decreasing. The results at 15°C and 25°C show that the formulation is very sensitive to the storage temperature and should be kept below 8°C for microbiological safety.

These results are similar to what is observed with a standard Spirulina liquid formulation containing trehalose, trisodium citrate and invert sugar (cf. Figure 4 below). The yeast and mold levels at 5°C remain stable throughout the 8 weeks of the challenge test.

### Example 2 - Performance in panning:

Hard panning was carried out following the recipe and procedure below:

**Table 1: Composition for panning syrup**

| *Ingredient* | *Percentage [%]* |
|---|---|
| *Sucrose* | *70* |
| *Tap water* | *30* |
| ***Total*** | ***100*** |
| *Other ingredients:* | |
| *Color* | *cf. procedure below* |
| *Polishing agents (Capol^{®} 4820 and Capol^{®} 425M)* | *cf. procedure below* |

Procedure for hard panning:
**1) Syrup:**
   ▪ Tare weighing scale with a pot and a spoon.
   ▪ Add and mix all the ingredients in the pot and heat until all the ingredients are completely dissolved.
   ▪ Add water to 500 g to the pot to regain brix level (e.g., weight after cooking = 460 g → add 40 g water).
   ▪ Measure brix level, it must be at 70.0 ± 0.5°Bx.
   ▪ The brix level can be adjusted by either adding water or further cooking.
   ▪ Cool down to room temperature.
**2) Roll-out:**
   ▪ Take a sheet of paper (quality: Color copy, appearance ideal whiteness, 160 g/m²).
   ▪ With a pipette, put a drop of panning syrup (diameter size 1.5 - 2.0 cm) on the paper.
   ▪ Take the metal stripped roll out stick (see Figure 4B) and make one roll down of the drop.

### Panning process:

The panning process comprised the following steps:
▪ Add all necessary information in the trial template: brix and pH of syrup, room moisture, room temperature, weather conditions, weight of centers before and after panning (used to calculate gain weight), weight of syrup before and after panning, at the end note down number of applied layers.
▪ Weigh colors in beakers, add the syrup and mix well.
▪ Put white centers into the pan.
▪ Small pan (capacity: 300 - 500 g centers): 1.5 - 2 mL syrup
▪ Large pan (capacity: 700 - 2000 g centers): 3 - 5 mL syrup
▪ Apply the syrup until all centers are wet.
▪ Let the centers dry between each layer. Air is applied for approx. 3 sec to simulate harsh production processes only at the end of each coating layer.
▪ Numbers of layers are between 24 and 26 depending on the type of dragee and the dosage of the color. (100 g white centers gain weight to approx. 105 g, meaning 5 % gain weight)
▪ Leave the centers in a sieve over night before polishing.
▪ Polish the dragees in the pan by applying Capol^{®} 4820 until all the centers are covered (guideline: approx. 1.5 mL of Capol^{®} 4820 for 300 - 400 g centers).
▪ Let the centers dry (and make sure they are not sticky).
▪ Add Capol^{®} 425M (guideline: approx. 1 ml of Capol^{®} 425M for 300 - 400 g centers).
▪ Let the centers dry (and make sure they are not sticky).
▪ Leave the polished product on a tray for 2 - 4 hours before packing.
▪ The dragees are stored at room temperature in zipper bags.

### Performance of the natural blue coloring composition in hard panning:

The natural blue coloring composition comprising Spirulina extract, dried glucose syrup and sucrose shows excellent panning performance due to the sugar combination used (sucrose and dried glucose syrup, no trehalose, no invert sugar).

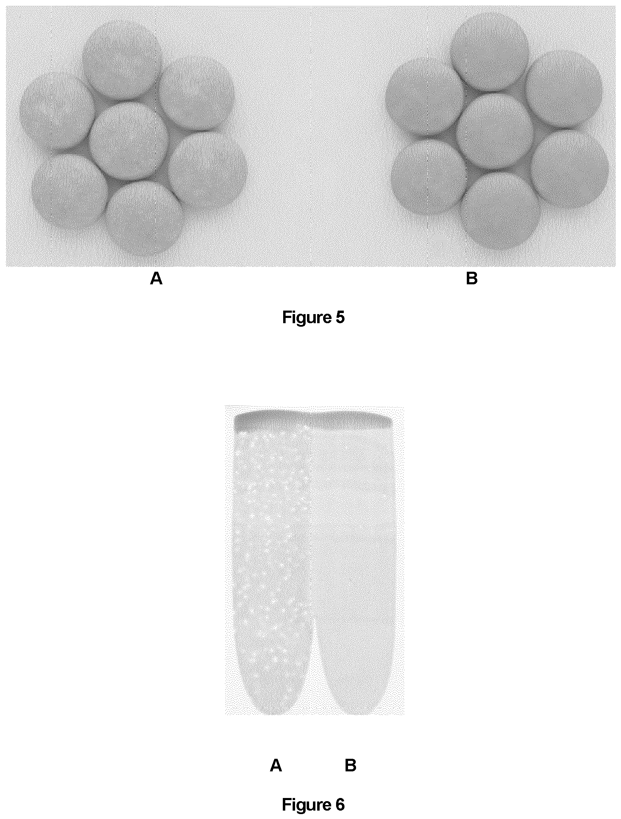

Figures 5 and 6 show a comparison in panning of a natural blue coloring composition composed of 6.3% Spirulina extract, 7.0% dried glucose syrup DE 21, 54.8% sucrose, 0.5% antifoam and 0.04% citric acid diluted in water (sample B). The comparative example is also a liquid formulation containing Spirulina, trehalose, trisodium citrate and invert sugar, with a similar color strength (sample A).

The dragees panned with the formulation of the invention showed an even and smooth surface as shown in Figure 5B. The color was evenly spread on the surface on the dragée. The comparative example (Figure 5A) shows a washed-off surface, which is indicated through an inhomogeneous color on the dragees.

The good covering abilities are confirmed by a roll-out test performed with the roll-out stick shown in Figure 5, where the difference in color appearance is clearly seen: the reference shows an inhomogeneous appearance contrary to the new formulation.

Both the panning syrup roll out as well as the panned dragees clearly show that the natural blue coloring composition comprising Spirulina extract, dried glucose syrup and sucrose has superior panning behavior. It results in an evenly distribution of the color and almost no white spots on the surface in comparison to a standard Spirulina formulation.

Figure 5 shows the panning results of Example 2: the natural blue coloring composition of the invention comprising Spirulina extract, dried glucose syrup and sucrose is shown in Figure 5B with a homogenous color appearance. The comparative liquid Spirulina formulation comprising trehalose, Spirulina extract, trisodium citrate and invert sugar is shown in Figure 5A.

Figure 6 shows a roll out comparison of the coloring abilities of Example 2. The natural blue coloring composition of the invention comprising Spirulina extract, dried glucose syrup and sucrose is shown in Figure 6B with a homogenous appearance resulting in an evenly distribution of the color and almost no white spots on the surface. The comparative liquid Spirulina formulation comprising trehalose, Spirulina extract, trehalose, trisodium citrate and invert sugar is shown in Figure 6A. The comparative example shows an inhomogeneous appearance.

Both the panning syrup roll out as well as the panned dragees clearly show that the present Spirulina formulation has superior panning behavior (resulting in an evenly distribution of the color and almost no white spots on the surface) in comparison to the comparative example comprising trehalose, Spirulina extract, trisodium citrate and invert sugar.

### Example 3 - Performance in jelly gum:

Jelly gum trials were carried out following the recipe and procedure below:

**Table 2: Composition of jelly:**

| Ingredient | Percentage [%] |
|---|---|
| **Gelatin mix:** | |
| Porcine Gelatine, 210-230 Bloom, 8 Mesh (PB Leiner GmbH) | 5,34 |
| Tap water | 13,55 |

| **Sugar mix:** | |
|---|---|
| Sucrose | 28,63 |
| Glucose syrup 40 DE (SKÆLSKØR, Scandic Food A/S) | 38,17 |
| Tap water | 14,31 |

| **Other ingredients:** | |
|---|---|
| Citric acid (50 % solution) | 2% |
| Color | cf. procedure |
| Molding starch (C*Clean Set 03703, Cerestar) | cf. procedure |
| Polishing agent (C 4468 D, Capol) | cf. procedure |

Procedure for jelly gum trials:
▪ Prepare gelatine mix: dissolve gelatine into cold water and let it stay until the gelatine is swollen. Put it at 80 °C in the water bath and wait until the gelatine is melted.
▪ In the meantime, prepare the sugar mix: boil sucrose, glucose syrup and water until 117 °C is reached. Cool down to 90 °C.
▪ Add the gelatine premix to the sugar mix and mix carefully until the mass is homogeneous.
▪ Pour the finished mass into plastic beakers for storage. Mass can be stored at room temperature until use.

Making jelly gums:
▪ Prepare moulds in starch using plaster moulds.
▪ Weigh color into a beaker.
▪ Add jelly gum mass and mix carefully.
▪ Addition of citric acid:
   1) If color is acid stable, color can be dissolved in the acid before jelly gum base is added.
   2) If color is sensitive to low pH, acid should be added as last ingredient when color is already pre-mixed with the jelly gum base (this version is used for trials with Spirulina).
▪ Stir carefully to prevent air bubbles.

Option A:
▪ Deposit the gum mass into the starch moulds using a funnel or a piping bag and leave for drying at room temperature for approx. 24-72 hours.
▪ Remove excess starch from the jelly gums using the dust collector.
▪ Polish jellies in a plastic bag with a few drops of polishing agent Capol 4468 D.

Option B:
▪ Fill ready colored jelly gum mass in an iwaki flask.
▪ Store iwaki flasks minimum 24 hours at room temperature and then perform color evaluation, both visually and with color measurement.

The jelly gums are stored at 4-8°C in zipper bags.

Two parameters are critical for a color used in jelly: stability towards acid and stability towards heat. The tests are performed against a comparative liquid Spirulina containing trehalose, an ingredient known for its stabilizing properties.

Nevertheless, the present natural blue coloring composition comprising Spirulina extract, dried glucose syrup, sucrose without trehalose performed almost as good as the reference in acid test (see Figure 7).

In light stability test, our formulation proved just as stable as the reference (see Figure 8).

Procedure for heat-acid stability test of Spirulina in jelly gum (see also Figure 7):
▪ Prepare colored jelly gum (minimum 300 g for each sample).
▪ Fill 50 g jelly gum mass before acid is added in one iwaki flask (50 g), sample (t0).
▪ Incorporate acid into the mass (2 %) and fill 50 g in one iwaki flask (t1) and place jelly gum mass in water bath (80 °C). Set and start watch, 5 minutes.
▪ Take samples after 5 min, 10 min and 15 min sample (t2, t3 and t4). For that fill jelly gum in an iwaki flask, and place jelly gum mass back in water bath. Set start watch, 5 minutes.
▪ Store iwaki flasks minimum 24 hours at room temperature and then perform color evaluation, both visually and with color measurement.

Figure 7 shows a comparison of the coloring performance of Example 3 in jelly. The natural blue coloring composition of the invention comprising Spirulina extract, dried glucose syrup and sucrose is shown in in the top row of Figure 7. The comparative liquid Spirulina formulation comprising Spirulina extract, trehalose, trisodium citrate and invert sugar is shown in bottom row of Figure 7. Column A shows the performance of the colouring compositions without acid. Column B shows the performance of the colouring compositions with added acid. Column C shows the performance of the colouring compositions after 5 minutes of heat treatment at 80°C. Column D shows the performance of the coloring compositions after 10 minutes of heat treatment at 80°C. Column E shows the performance of the coloring compositions after 15 minutes of heat treatment at 80°C.

In addition, the light stability of the compositions of example 3 is tested in jelly gum. An accelerated light stability test under the following conditions is used: Atlas Suntester XLS+, Xenon lamp 480W/m2, 25°C, window glass filter. The evaluation is done both visually and with color measurement after 1, 6, 12, 24 and 48 hours. The results are shown in Figure 8. Column A of Figure 8 represents the comparative example, a liquid coloring composition comprising Spirulina extract, trehalose, trisodium citrate and invert sugar in jelly. Column B of Figure 8 shows the coloring performance of the inventive natural blue coloring composition comprising Spirulina extract, dried glucose syrup, and sucrose in jelly. The new natural blue coloring composition has a comparable light stability than the standard sample.

### Example 4 - Formulation with salt:

Salt, such as sodium chloride, can be added to the formulation in order to reduce the sucrose content. The concentration of salt is from 2 w% to 20 w%, preferably from 8 w% to 12 w%.

A natural blue coloring composition is prepared with 6.9 w% Spirulina extract, 7.0 w% dried glucose syrup, 30.0 w% sucrose, 10.0 w% sodium chloride, 0.5 w% antifoam and 0.07 w% citric acid diluted in water.

The natural blue coloring composition has a pigment strength of 25.3 CU/kg, a Brix of 56°Bx and a water activity of 0.820. Its LCh parameters are: lightness = 70.1, chroma = 42.2 and hue = 227.4.

## Claims

1. A liquid natural blue coloring composition comprising a phycocyanin-containing extract, in particular a Spirulina extract, further comprising:
▪ a starch-based compound with a Dextrose Equivalent (DE) between 19 and 23, preferably 21; and
▪ sucrose;
wherein the natural blue coloring composition is obtainable by a process wherein
the step order is:
1) Adding the phycocyanin-containing extract, in particular the Spirulina extract, to an aqueous solution, preferably water, under agitation to obtain a first solution;
2) Adding the starch-based compound with a DE between 19 and 23, preferably 21, under agitation to obtain a second solution; and
3) Adding sucrose under agitation to obtain the natural blue coloring composition.
wherein the concentration of the starch-based compound is from 1 w% to 15 w% as compared to the total weight of the natural blue coloring composition; and
wherein the concentration of sucrose is
▪ In the absence of a salt, from 40 w% to 70 w% as compared to the total weight of the natural blue coloring composition; or
▪ In the presence of a salt, from 10 w% to 50 w% as compared to the total weight of the natural blue coloring composition.

2. The natural blue coloring composition according to any one of the preceding claims, wherein the natural blue coloring composition does not comprise any trehalose, trisodium citrate, acetic acid or glycerol or combinations thereof.

3. The natural blue coloring composition according to any one of the preceding claims, wherein the starch-based compound is a dried glucose syrup or a maltodextrin.

4. The natural blue coloring composition according to any one of the preceding claims, wherein the concentration of the phycocyanin-containing extract, in particular the Spirulina extract, is from 1 w% to 15 w%, preferably from 2,5 w% to 12,5 w%, preferably from 5 w% to 10 w% as compared to the total weight of the natural blue coloring composition.

5. The natural blue coloring composition according to any one of the preceding claims, wherein the natural blue coloring composition has a color strength E10% from 20 CU/kg to 40 CU/kg, preferably from 22 CU/kg to 30 CU/kg, even more preferably from 24 CU/kg to 28 CU/kg as measured by a spectrophotometer Shimadzu UV 1800 or 1900 with phosphate buffer pH 6,0.

6. The natural blue coloring composition according to any one of the preceding claims, wherein the concentration of the starch-based compound is from 2,5 w% to 12,5 w%, preferably from 5 w% to 10 w% as compared to the total weight of the natural blue coloring composition.

7. The natural blue coloring composition according to any one of the preceding claims, wherein the concentration of sucrose is
▪ In the absence of a salt, from 45 w% to 65 w%, preferably from 50 w% to 60 w% as compared to the total weight of the natural blue coloring composition; or
▪ In the presence of a salt, from 20 w% to 40 w%, preferably from 25 w% to 35 w% as compared to the total weight of the natural blue coloring composition.

8. The natural blue coloring composition according to any one of the preceding claims, wherein the natural blue coloring composition further comprises antifoaming agents, pH adjuster, preferably citric acid and/or salts, preferably sodium chloride.

9. The natural blue coloring composition according to claim 1, wherein the pH of the natural blue coloring composition is between 4 and 6, preferably between 4.5 and 5.5.

10. The use of the natural blue coloring composition according to any one of the preceding claims for coloring food products, preferably confectionary products, even more preferably panned confectionary, jelly gum or ice cream.

11. A method for producing the natural blue coloring composition of any one of the preceding claims, wherein the step order is:
1) Adding the phycocyanin-containing extract, in particular the Spirulina extract, to an aqueous solution, preferably water, under agitation to obtain a first solution;
2) Adding the starch-based compound with a DE between 19 and 23, preferably 21, under agitation to obtain a second solution; and
3) Adding sucrose under agitation to obtain the natural blue coloring composition.

12. The method of claim 11, wherein the agitation is performed until the phycocyanin-containing extract, in particular the Spirulina extract, the starch-based compound with a DE between 19 and 23, preferably 21, and the sucrose are evenly dispersed and dissolved preferably by an overhead stirrer or a powder/liquid mixer involving high-shear mixing.

13. The method of claims 11 or 12, wherein the temperature is in the case of
▪ Overhead stirrer: from 18°C to 40°C, preferably from 20°C to 28°C; or
▪ High-shear mixer: from 5°C to 40°C, preferably from 20°C to 28°C.

14. A food product, preferably confectionary product, even more preferably a panned confectionary product, jelly gum or ice cream comprising the natural blue coloring composition of any one of the preceding claims or obtained through the process of any one of the preceding claims.

## Patentansprüche

1. Flüssige, natürlich blau färbende Zusammensetzung, die einen Phycocyanin-haltigen Extrakt umfasst, insbesondere einen Spirulina-Extrakt, ferner umfassend:
▪ eine Verbindung auf Stärkebasis mit einem Dextroseäquivalent (DE) zwischen 19 und 23, vorzugsweise 21; und
▪ Saccharose;
wobei die natürlich blau färbende Zusammensetzung durch ein Verfahren erhältlich ist, bei dem die Reihenfolge der Schritte wie folgt ist:
1) Zugabe des Phycocyanin-haltigen Extrakts, insbesondere des Spirulina-Extrakts, zu einer wässrigen Lösung, vorzugsweise Wasser, unter Rühren, um eine erste Lösung zu erhalten;
2) Zugabe der Verbindung auf Stärkebasis mit einem DE zwischen 19 und 23, vorzugsweise 21, unter Rühren, um eine zweite Lösung zu erhalten; und
3) Zugabe von Saccharose unter Rühren, um die natürlich blau färbende färbende Zusammensetzung zu erhalten.
wobei die Konzentration der Verbindung auf Stärkebasis zwischen 1 Gew.-% und 15 Gew.-%beträgt, bezogen auf das Gesamtgewicht der natürlich blau färbenden Zusammensetzung; und
wobei die Konzentration der Saccharose
▪ In Abwesenheit eines Salzes 40 bis 70 Gew.-% beträgt, bezogen auf das Gesamtgewicht der natürlich blau färbende Zusammensetzung; oder
▪ In Gegenwart eines Salzes 10 bis 50 Gew.-% beträgt, bezogen auf das Gesamtgewicht der natürlich blau färbende Zusammensetzung.

2. Die natürlich blau färbende Zusammensetzung nach einem der vorhergehenden Ansprüche, wobei die natürlich blau färbende Zusammensetzung keine Trehalose, kein Trinatriumcitrat, keine Essigsäure oder kein Glycerin oder Kombinationen davon enthält.

3. Die natürlich blau färbende Zusammensetzung nach einem der vorhergehenden Ansprüche, wobei die Verbindung auf Stärkebasis ein getrockneter Glukosesirup oder ein Maltodextrin ist.

4. Die natürlich blau färbende Zusammensetzung nach einem der vorhergehenden Ansprüche, wobei die Konzentration des phycocyaninhaltigen Extrakts, insbesondere des Spirulina-Extrakts, von 1 Gew.-% bis 15 Gew.-%, vorzugsweise von 2,5 Gew.-% bis 12,5 Gew.-%, vorzugsweise von 5 Gew.-% bis 10 Gew.-%, bezogen auf das Gesamtgewicht der natürlichen, blau färbenden Zusammensetzung, beträgt.

5. Die natürlich blau färbende Zusammensetzung nach einem der vorhergehenden Ansprüche, wobei die natürliche, blaue Zusammensetzung eine Farbstärke E10% von 20 CU/kg bis 40 CU/kg, vorzugsweise von 22 CU/kg bis 30 CU/kg, noch bevorzugter von 24 CU/kg bis 28 CU/kg, gemessen mit einem Spektrophotometer Shimadzu UV 1800 oder 1900 mit Phosphatpuffer pH 6,0, aufweist.

6. Die natürlich blau färbende Zusammensetzung nach einem der vorhergehenden Ansprüche, wobei die Konzentration der Verbindung auf Stärkebasis 2,5 bis 12,5 Gew.-%, vorzugsweise 5 bis 10 Gew.-%, bezogen auf das Gesamtgewicht der natürlichen blau färbenden Zusammensetzung beträgt.

7. Die natürlich blau färbende Zusammensetzung nach einem der vorhergehenden Ansprüche, wobei die Konzentration der Saccharose beträgt
▪ In Abwesenheit eines Salzes 45 bis 65 Gew.-%, vorzugsweise 50 bis 60 Gew.-%, bezogen auf das Gesamtgewicht der natürlich blau färbenden Zusammensetzung; oder
▪ In Gegenwart eines Salzes 20 bis 40 Gew.-%, vorzugsweise 25 bis 35 Gew.-%, bezogen auf das Gesamtgewicht der natürlich blau färbenden Zusammensetzung.

8. Die natürlich blau färbende Zusammensetzung nach einem der vorhergehenden Ansprüche, wobei die natürliche, blaue Zusammensetzung weiterhin Entschäumer, pH-Einsteller, vorzugsweise Zitronensäure und/oder Salze, vorzugsweise Natriumchlorid, enthält.

9. Die natürlich blau färbende Zusammensetzung nach Anspruch 1, wobei der pH-Wert der natürlichen blauen Zusammensetzung zwischen 4 und 6, vorzugsweise zwischen 4,5 und 5,5 liegt.

10. Verwendung der natürlich blau färbenden Zusammensetzung nach einem der vorangehenden Ansprüche zum Färben von Lebensmitteln, vorzugsweise von Süßwaren, noch bevorzugter von getränkten Süßwaren, Gummibärchen oder Speiseeis.

11. Verfahren zur Herstellung der natürlich blau färbenden Zusammensetzung nach einem der vorhergehenden Ansprüche, wobei die Reihenfolge der Schritte die folgende ist:
1) Zugabe des Phycocyanin-haltigen Extrakts, insbesondere des Spirulina-Extrakts, zu einer wässrigen Lösung, vorzugsweise Wasser, unter Rühren, um eine erste Lösung zu erhalten;
2) Zugabe der Verbindung auf Stärkebasis mit einem DE zwischen 19 und 23, vorzugsweise 21, unter Rühren, um eine zweite Lösung zu erhalten; und
3) Zugabe von Saccharose unter Rühren, um die natürlich blau färbende Zusammensetzung zu erhalten.

12. Verfahren nach Anspruch 11, wobei das Rühren so lange durchgeführt wird, bis der phycocyaninhaltige Extrakt, insbesondere der Spirulina-Extrakt, die Verbindung auf Stärkebasis mit einem DE zwischen 19 und 23, vorzugsweise 21, und die Saccharose gleichmäßig dispergiert und aufgelöst sind, vorzugsweise durch einen Überkopfrührer oder einen Pulver/Flüssigkeit-Mischer, der mit hoher Scherkraft mischt.

13. Verfahren nach Anspruch 11 oder 12, wobei die Temperatur im Falle von
▪ Rührwerk: von 18°C bis 40°C, vorzugsweise von 20°C bis 28°C beträgt; oder
▪ Mischer mit hoher Scherkraft: von 5°C bis 40°C, vorzugsweise von 20°C bis 28°C beträgt.

14. Lebensmittelprodukt, vorzugsweise Süßwarenprodukt, noch bevorzugter ein hartpanniertes Süßwarenprodukt, Gelee-Gummi oder Speiseeis, das die natürlich blau färbende Zusammensetzung nach einem der vorangehenden Ansprüche enthält oder durch das Verfahren nach einem der vorangehenden Ansprüche erhalten wurde.

## Revendications

1. Composition colorante bleue naturelle comprenant un extrait contenant de la phycocyanine, liquide en particulier un extrait de spiruline, comprenant en outre :
▪ un composé à base d'amidon dont l'équivalent dextrose (DE) est compris entre 19 et 23, de préférence 21 ; et
▪ le saccharose ;
dans lequel la composition colorante bleue naturelle peut être obtenue par un procédé dans lequel l'ordre des étapes est le suivant :
1) Ajouter l'extrait contenant de la phycocyanine, en particulierl'extrait de spiruline, à une solution aqueuse, de préférence de l'eau, sous agitation pour obtenir une première solution ;
2) Ajouter le composé à base d'amidon avec un **DE** compris entre 19 et 23, de préférence 21, sous agitation pour obtenir une deuxième solution; et
3) Ajout de saccharose sous agitation pour obtenir la composition colorante bleue naturelle.
dans lequel la concentration du composé à base d'amidon est de 1 % à 15 % rapport au poids total de la composition colorante bleue naturelle ; et
dans lequel la concentration de saccharose est
▪ En l'absence de sel, de 40 % à 70 % par rapport au poids total de la composition colorante bleue naturelle ; ou
▪ En présence d'un sel, de 10 % à 50 % par rapport au poids total de la composition colorante bleue naturelle.

2. La composition colorante bleue naturelle selon l'une des revendications précédentes, dans laquelle la composition colorante naturelle bleue ne comprend pas de tréhalose, de citrate trisodique, d'acide acétique ou de glycérol ou des combinaisons de ceux-ci.

3. La composition colorante bleue naturelle selon l'une quelconque des revendications précédentes, dans laquelle le composé à base d'amidon est un sirop de glucose déshydraté ou une maltodextrine.

4. La composition colorante bleue naturelle selon l'une quelconque des revendications précédentes, dans laquelle la concentration de l'contenant des phycocyaninesextrait de , particulier enl'extrait de spiruline, est de 1 % à 15 %, de préférence de 2,5 % à 12,5 %, de préférence de 5 % à 10 % par rapport au poids total de la composition colorante naturelle bleue.

5. La composition colorante bleue naturelle selon l'une quelconque des revendications précédentes, dans laquelle la composition colorante naturelle bleue a un pouvoir colorant E10% de 20 CU/kg à 40 CU/kg, de préférence de 22 CU/kg à 30 CU/kg, encore plus préférentiellement de 24 CU/kg à 28 CU/kg tel que mesuré par un spectrophotomètre Shimadzu UV 1800 ou 1900 avec un tampon phosphate pH 6,0.

6. La composition colorante bleue naturelle selon l'une quelconque des revendications précédentes, dans laquelle la concentration du composé à base d'amidon est de 2,5 % à 12,5 %, de préférence de 5 % à 10 % par rapport au poids total de la composition colorante bleue naturelle.

7. Composition colorante bleue naturelle selon l'une quelconque des revendications précédentes, dans laquelle la concentration de saccharose est de
▪ En l'absence de sel, de 45 % à 65 %, de préférence de 50 % à 60 % par rapport au poids total de la composition colorante bleue naturelle ; ou
▪ En présence d'un sel, de 20 % à 40 %, de préférence de 25 % à 35 % par rapport au poids total de la composition colorante bleue naturelle.

8. La composition colorante bleue naturelle selon l'une quelconque des revendications précédentes, dans laquelle la composition colorante naturelle bleue comprend en outre des agents antimousse, un adjuvant de pH, de préférence de l'acide citrique et/ou des sels, de préférence du chlorure de sodium.

9. Composition colorante bleue selon naturelle la revendication 1, dans laquelle le pH de la composition colorante naturelle bleue est compris entre 4 et 6, de préférence entre 4,5 et 5,5.

10. L'utilisation de la composition colorante bleue naturelle selon l'une quelconque des revendications précédentes pour colorer des produits alimentaires, de préférence des produits de confiserie, encore plus préférentiellement des confiseries en boîte, de la gomme gélifiée ou de la crème glacée.

11. Méthode de production de la composition colorante bleue naturelle de l'une quelconque des revendications précédentes, dans laquelle l'ordre des étapes est le suivant :
1) Ajouter l'extrait contenant de la phycocyanine, en particulierl'extrait de spiruline, à une solution aqueuse, de préférence de l'eau, sous agitation pour obtenir une première solution ;
2) Ajouter le composé à base d'amidon avec un DE compris entre 19 et 23, de préférence 21, sous agitation pour obtenir une deuxième solution ; et
3) Ajout de saccharose sous agitation pour obtenir la composition colorante bleue naturelle.

12. Procédé selon la revendication 11, dans lequel l'agitation est effectuée jusqu'à ce que l'extrait contenant de la phycocyanine, en particulierl'extrait de spiruline, le composé à base d'amidon ayant un DE compris entre 19 et 23, de préférence 21, et le saccharose soient uniformément dispersés et dissous, de préférence au moyen d'un agitateur aérien ou d'un mélangeur poudre/liquide impliquant un mélange à haut niveau de cisaillement.

13. La méthode des revendications 11 ou 12, dans laquelle la température est dans le cas de
▪ Agitateur aérien : de 18°C à 40°C, de préférence de 20°C à 28°C ; ou
▪ Mélangeur à haut cisaillement : de 5°C à 40°C, de préférence de 20°C à 28°C.

14. Produit alimentaire, de préférence produit de confiserie, de préférence encore produit de confiserie en boîte, gomme gélifiée ou crème glacée comprenant la composition colorante bleue naturelle de l'une quelconque des revendications précédentes ou obtenue par le procédé de l'une quelconque des revendications précédentes.
